# EUROPÄISCHE PATENTSCHRIFT

(11) **EP 3 541 604 B1**
(45) Veröffentlichungstag und Bekanntmachung des Hinweises auf die Patenterteilung: **24.02.2021**
(21) Anmeldenummer: 17793635.8
(22) Anmeldetag: 30.10.2017
(51) Int. Cl.: B29C 64/118, B29C 64/209, B33Y 30/00, B29C 64/106

(54) **3D-DRUCKKOPF MIT ZUSÄTZLICHEN TEMPERIERUNGSMITTELN**
3D PRINTHEAD COMPRISING ADDITIONAL TEMPERATURE CONTROL MEANS
TÊTE D'IMPRESSION 3D DOTÉE DE MOYENS DE THERMORÉGULATION SUPPLÉMENTAIRES

(30) Priorität: 16.11.2016 DE 102016222566
(43) Veröffentlichungstag der Anmeldung: 25.09.2019
(73) Patentinhaber: Robert Bosch GmbH, 70442 Stuttgart (DE)
(72) Erfinder: ROMAN, Victor, 70567 Stuttgart (DE); LUNG, Norman, 71384 Weinstadt (DE); JAHNLE, Hendrik, 71397 Leutenbach (DE)
(86) Internationale Anmeldenummer: PCT/EP2017/077776
(87) Internationale Veröffentlichungsnummer: WO 2018/091259

(56) Entgegenhaltungen:
- WO-A1-90/02034
- DE-A1-102013 114 086
- US-A- 5 649 277

## Beschreibung

Die vorliegende Erfindung betrifft einen Druckkopf für 3D-Drucker zur selektiven lokalen Ausgabe der flüssigen Phase eines Ausgangsmaterials.

### Stand der Technik

Ein 3D-Drucker für ein in seiner Viskosität veränderliches Material erhält eine feste Phase dieses Materials als Ausgangsmaterial, erzeugt daraus eine flüssige Phase und bringt diese flüssige Phase selektiv an den Stellen, die zu dem zu erzeugenden Objekt gehören, auf. Ein solcher 3D-Drucker umfasst einen Druckkopf, in dem das Ausgangsmaterial druckfertig aufbereitet wird. Weiterhin sind Mittel zur Erzeugung einer Relativbewegung zwischen dem Druckkopf und der Arbeitsfläche, auf der das Objekt entstehen soll, vorgesehen. Dabei können entweder nur der Druckkopf, nur die Arbeitsfläche oder aber sowohl der Druckkopf als auch die Arbeitsfläche bewegt werden.

Zur Überführung in die flüssige Phase wird das Ausgangsmaterial typischerweise erwärmt. Die US 2016/082 627 A1 offenbart, das Ausgangsmaterial in Granulatform zuzuführen und mit einer Förderschnecke zu einer beheizten Zone zu fördern, aus der es in plastifizierter Form austritt.

Dabei besteht nach der DE 20 2015 006 748 U1 generell ein Zielkonflikt dahingehend, dass das Ausgangsmaterial nicht bereits dort aufschmelzen soll, wo es in der festen Phase zugeführt wird.

In der DE 10 2015 002 967 A1 wird daher vorgeschlagen, das Ausgangsmaterial mit einer Strahlungsheizung oder einer anderen lokal wirksamen Heizung erst im letzten Moment nach dem Verlassen des Druckkopfes, oder auch beim Auftreffen auf dem herzustellenden Objekt, zu erwärmen. Das Dokument US-A-5649277 offenbart einen Druckkopf gemäß dem Oberbegriff des Anspruchs 1.

### Offenbarung der Erfindung

Im Rahmen der Erfindung wurde ein Druckkopf für einen 3D-Drucker entwickelt. Dieser Druckkopf umfasst ein Arbeitsvolumen zur Aufnahme eines in seiner Viskosität veränderlichen Ausgangsmaterials. Das Arbeitsvolumen ist durch Bewegung eines Kolbens veränderlich, d.h. vergrößerbar oder verkleinerbar. Weiterhin weist das Arbeitsvolumen eine Austrittsöffnung auf, durch die eine flüssige Phase des Ausgangsmaterials durch die Bewegung des Kolbens extrudierbar ist.

Erfindungsgemäß weist der Kolben Temperierungsmittel auf, die insbesondere zur Temperierung des Kolbens selbst, und/oder des Ausgangsmaterials, dienen können.

Es wurde erkannt, dass es für die Temperatur des Kolbens sowohl eine Obergrenze als auch eine Untergrenze gibt. Der Kolben ist also in einem vorgegebenen Temperaturkorridor zu halten, beispielsweise mit einer Kühlung. Die Obergrenze für die Temperatur des Kolbens liegt dort, wo beispielsweise unerwünschterweise Ausgangsmaterial, das in Kontakt mit dem Kolben steht, aufschmilzt oder der Druckkopf sonstwie überhitzt wird. Auf der anderen Seite sollte der Kolben auch nicht so kalt werden, dass sich an ihm Kondenswasser bildet. Kondenswasser kann den Druckvorgang unterbrechen. Wenn Kondenswasser in eine Schmelze aus dem Ausgangsmaterial gelangt, kann es weiterhin dort verdampfen und zu einer ungeregelten, explosionsartigen Extrusion von Ausgangsmaterial führen. Für die Einhaltung beider Grenzen ist jeweils die Temperatur des Kolbens maßgeblich. Eine Temperaturregelung, die ausschließlich von außerhalb des Arbeitsvolumens durch dessen Wand hindurch wirkt, wirkt lediglich indirekt auf die Temperatur des Kolbens. Die am Kolben angeordneten Temperierungsmittel beeinflussen die Temperatur des Kolbens unmittelbar und gewährleisten so eine genauere Einhaltung des genannten Temperaturkorridors.

Eine Überhitzung des Druckkopfes kann beispielsweise Schäden an der Antriebsquelle des Kolbens hervorrufen. Ist diese Antriebsquelle beispielsweise ein Hydraulikzylinder, so kann Wärme aus dem Kolben über die Kolbenstange, mit der der Kolben an die Antriebsquelle gekoppelt ist, in das Hydrauliköl der Antriebsquelle eingetragen werden. Dadurch können das Hydrauliköl und/oder die verwendeten Schmierfette geschädigt werden, was im schlimmsten Fall zu einer Beeinträchtigung der Druckqualität oder gar zum Defekt des 3D-Druckers führt.

In diesem Zusammenhang ist relevant, dass der Wärmeeintrag aus dem Ausgangsmaterial in den Kolben während des Druckvorgangs nicht stationär ist, sondern sehr stark schwankt. Wird der Kolben in Richtung der Austrittsöffnung verschoben und Druck auf das Ausgangsmaterial ausgeübt, ist der Wärmeeintrag in den Kolben maximal. Wird der Kolben hingegen zurückgezogen und verliert den Kontakt zum Ausgangsmaterial, ist der Wärmeeintrag in den Kolben minimal. Für eine Temperaturregelung des Kolbens gibt es also während des Druckvorgangs immer wieder einen Anlass zum Eingreifen.

In einer besonders vorteilhaften Ausgestaltung der Erfindung weist der Kolben mindestens einen Kanal für die Durchführung eines Temperierungsmediums auf. Über das Temperierungsmedium kann dann Wärme in der gewünschten Richtung transportiert werden, beispielsweise vom Kolben in Richtung auf eine Wärmesenke oder auch - zum Heizen des Ausgangsmaterials - von einer Wärmequelle in Richtung auf den Kolben. Das Temperierungsmedium kann beispielsweise Wasser, ein Thermoöl, Druckluft, Heißgas oder auch ein tiefkaltes verflüssigtes Gas, wie beispielsweise flüssiger Stickstoff, sein. Der Kolben kann also beispielsweise als Vorheizung oder auch als alleinige Heizung des Ausgangsmaterials verwendet werden, was insbesondere dann vorteilhaft ist, wenn das Ausgangsmaterial ein hoch schmelzendes Material ist und/oder wenn im Interesse einer hohen Druckgeschwindigkeit ein hoher Massenstrom an Ausgangsmaterial gefordert ist. Hat das Ausgangsmaterial einen niedrigen Schmelzpunkt, so kann die Temperierung des Kolbens dazu verwendet werden, die Temperatur des Ausgangsmaterials bewusst unter diesem Schmelzpunkt zu halten. Dies ist kontra-intuitiv im Vergleich zu Lösungen nach dem bisherigen Stand der Technik, die die Temperatur lediglich erhöhen können.

In einer besonders vorteilhaften Ausgestaltung der Erfindung ist der Kolben in ein dem Ausgangsmaterial zugewandtes Druckteil und ein dem Ausgangsmaterial abgewandtes, mit dem Druckteil in Wärmekontakt stehendes Temperierungsteil unterteilt. Auf diese Weise können beide Teile jeweils auf ihre spezifische Aufgabe optimiert sein.

Beispielsweise kann mindestens ein Teilabschnitt des Kanals durch das Temperierungsteil verlaufen. Das Temperierungsteil kann dann aus einem Material gefertigt sein, das besonders gut dazu geeignet ist, in dieser Form bearbeitet zu werden. Das Temperierungsteil kann insbesondere mit einer Technik gefertigt sein, die besonders gut zur Herstellung komplizierter und zugleich filigraner Strukturen geeignet ist. Zur Herstellung mediendichter dreidimensionaler Strukturen ist beispielsweise die additive Fertigung, und hier insbesondere der 3D-Druck, geeignet.

Vorteilhaft ist das Druckteil aus einem härteren Werkstoff gefertigt als das Temperierungsteil. Das Druckteil wird mechanisch stärker auf Verschleiß beansprucht, da es das Arbeitsvolumen gegen den Austritt des Ausgangsmaterial abdichtet und somit an der Innenwand des Arbeitsvolumens reiben kann. Beispielsweise kann das Druckteil aus härtbarem oder gehärtetem Stahl gefertigt sein. Das Temperierungsteil kann beispielsweise aus Aluminium gefertigt sein, das günstig und vergleichsweise einfach zu bearbeiten ist bei zugleich guter Wärmeleitfähigkeit. In Kombination bilden dann das Druckteil und das Temperierungsteil ein günstiges und hoch wirksames Kompositteil.

Das Temperierungsteil und das Druckteil können insbesondere zueinander korrespondierende Teilabschnitte eines Kanals für das Temperierungsmedium aufweisen. Beispielsweise können der Kanal für den Vorlauf und der Kanal für den Rücklauf des Temperierungsmediums durch das Temperierungsteil verlaufen, und beide Kanäle können in gemeinsam in eine Bohrung in dem Druckteil münden. Die Bohrung ist vergleichsweise einfach herzustellen. An ihrer Innenwand tauscht das Temperierungsmedium Wärme mit dem Druckteil aus, bevor es durch den Rücklauf wieder aus dem Kolben geführt wird.

Alternativ oder auch in Kombination zu einem Kanal für die Durchführung eines Temperierungsmediums kann der Kolben auch durch Wärmeleitung an ein Wärmereservoir gekoppelt sein, beispielsweise über eine Stange oder Litze aus einem gut wärmeleitenden Metall wie Kupfer. Auf diese Weise kann die Wärme ohne das Risiko von Undichtigkeiten und ohne bewegliche Teile transportiert werden um den Preis, dass sich die Geschwindigkeit des Wärmetransports nicht durch eine Erhöhung der Strömungsgeschwindigkeit des Temperierungsmediums erhöhen lässt.

Im einfachsten Fall kann beispielsweise ein Kühlblech oder Kühlkörper an die Umgebungsluft als Wärmereservoir gekoppelt sein.

In einer weiteren besonders vorteilhaften Ausgestaltung der Erfindung weist das Arbeitsvolumen eine Einzugszone mit einer Zuführung für das Ausgangsmaterial sowie eine heizbare Plastifizierungszone auf. Dabei ist der Kolben in die Einzugszone einführbar.

In dieser Anordnung kann in zyklischer Weise ein beispielsweise granulatförmiges Ausgangsmaterial aus der Zuführung in das Arbeitsvolumen rieseln, wenn der Kolben hinter den Bereich der Zuführung zurückgezogen wird. Wird der Kolben anschließend in Richtung der Austrittsöffnung bewegt, so wird das Ausgangsmaterial komprimiert und in die Plastifizierungszone gefördert. Dieser Prozess ist darauf angewiesen, dass das mit dem Kolben in Kontakt stehende Ausgangsmaterial nicht aufgeschmolzen wird. Die plastifizierte Phase des Ausgangsmaterials hat eine zähe, klebrige Konsistenz mit einer hohen Neigung zur Oberflächenadhäsion. Kommt der Kolben mit dieser Phase in Berührung, kann er damit verkleben, wodurch das Nachrieseln von frischem Ausgangsmaterial beim Zurückziehen des Kolbens behindert oder sogar vollständig unterbunden werden kann.

Daher sind vorteilhaft die Temperierungsmittel dazu ausgebildet sind, die Temperatur Ts der Einzugszone auch dann unterhalb der Temperatur T_{P} zu halten, ab der das Ausgangsmaterial plastifiziert, wenn die flüssige Phase des Ausgangsmaterials aus der Austrittsöffnung austritt. Mit einer alleinigen Kühlung des Kolbens über außerhalb des Arbeitsvolumens angeordnete Kühlmittel lässt sich dies insbesondere bei hohen Schmelztemperaturen, und/oder bei langen Druckaufträgen von 12 Stunden und mehr, nicht immer gewährleisten. Beispielsweise hat der Kunststoff PES eine Schmelztemperatur ab 320 °C.

Eine außerhalb des Arbeitsvolumens angeordnete Kühlung der Einzugszone ist gleichwohl vorteilhaft zur Unterstützung der Kühlung durch den Kolben. Es ist auch möglich, eine solche Kühlung mit einer Temperierung durch den Kolben zu kombinieren, die lediglich zum Heizen des Kolbens ausgebildet ist. Beispielsweise kann eine solche Temperierung deaktiviert werden, wenn der Kolben hinter die Einzugszone zurückgefahren wird, und sie kann wieder aktiviert werden, wenn frisches Ausgangsmaterial in Richtung auf die Plastifizierungszone gefördert wird. Die unmittelbar auf den Kolben wirkende Temperierung reagiert hinreichend schnell auf die Anforderung zum Deaktivieren bzw. zum Aktivieren.

Es sind auch Ausgestaltungen des Druckkopfes sinnvoll, die ohne eine Einzugszone für die Zuführung einer festen Phase des Ausgangsmaterials auskommen. Beispielsweise kann das Arbeitsvolumen eine Zuführung für die flüssige Phase des Ausgangsmaterials aufweisen, aus der beispielsweise immer dann Ausgangsmaterial in das Arbeitsvolumen fließt, wenn der Kolben hinter die Zuführung zurückgezogen wurde.

In einer weiteren besonders vorteilhaften Ausgestaltung der Erfindung ist der Kolben über ein wärmeisolierendes Verbindungsstück mit seiner Antriebsquelle verbunden. Auf diese Weise wird ein unerwünschter Wärmeeintrag in eine wärmeempfindliche Antriebsquelle, wie beispielsweise einen Hydraulikzylinder oder eine piezoelektrische Antriebsquelle, vorteilhaft vermindert.

In einer besonders vorteilhaften Ausgestaltung der Erfindung ist die Antriebsquelle für den Kolben dazu ausgebildet, in dem Ausgangsmaterial einen Druck p von 1000 bar oder mehr, bevorzugt von 1500 bar oder mehr, zu erzeugen. Auf diese Weise kann auch die flüssige Phase eines hoch viskosen Ausgangsmaterials durch deutlich kleinere Austrittsöffnungen hindurch gedrückt werden, so dass die Auflösung filigraner gedruckter Strukturen deutlich verbessert werden kann.

Alternativ ist vorteilhaft die Antriebsquelle für den Kolben dazu ausgebildet, in dem Ausgangsmaterial einen Druck p zwischen 350 bar und 750 bar zu erzeugen. In diesem Druckbereich lässt sich eine hinreichend große Klasse von Kunststoffen als Ausgangsmaterialien verarbeiten bei vergleichsweise moderatem apparativem Aufwand.

Beim 3D-Druck mit einem Filament als Ausgangsmaterial wird der Druck, der das flüssige Material aus der Austrittsöffnung des Druckkopfes treibt, durch den Vorschub des Filaments erzeugt. Der maximal erreichbare Druck ist somit prinzipbedingt vergleichweise gering. Er liegt in der Größenordnung 60-70 bar. Bei höheren Drücken fließt geschmolzenes Material in rückwärtiger Richtung am Filament vorbei und tritt somit an der falschen Stelle aus dem Druckkopf aus. Daher können aktuell im kommerziellen Maßstab Düsendurchmesser, und damit laterale Strukturauflösungen, ab etwa 0,4 mm verwendet werden. Gegenstand der Forschung ist derzeit, diese Grenze auf Werte von 0,2 mm oder weniger zu verbessern. Manche Kunststoffe lassen sich auch gar nicht oder nur mit uninteressanten Düsendurchmessern verarbeiten, weil sie auch im flüssigen Zustand zu viskos für den zur Verfügung stehenden Druck sind. Die Genauigkeit der gedruckten Strukturen liegt in der gleichen Größenordnung.

Steht hingegen bedingt durch die Verwendung des Kolbens ein deutlich höherer Druck zur Verfügung, so sind Düsendurchmesser um 0,1 mm verwendbar, und Strukturen können bis auf etwa ± 50 µm genau gedruckt werden. Weiterhin können prinzipiell alle thermoplastischen Materialien, sowie auch gewisse Duroplaste und Elastomere, verwendet werden. Auch niederschmelzende Lote, wie etwa Zinn, oder Materialien mit Füllstoffen jeglicher Art können verwendet werden. Gegebenenfalls sind bei Verwendung dieser Materialien verschiedene Düsendurchmesser nötig. Der Druckkopf funktioniert mit jedem Düsendurchmesser, da die Förderung des Ausgangsmaterials mit dem Kolben beliebig skalierbar ist. Die Skalierung ist lediglich an das konkrete Material anzupassen.

Die Antriebsquelle für den Kolben kann beispielsweise ein Elektromotor mit einer mechanischen Übersetzung, etwa durch eine mechanische Spindel, sein. Bei einer solchen Übersetzung geht eine Kraft- und damit Druckverstärkung mit einer Wegverlängerung einher, so dass der Druckaufbau entsprechend länger dauert und der Druckkopf durch die niedrigere Kraftdichte schwerer wird. Alternativ kann die Antriebsquelle eine hydraulische Druckquelle, und hier insbesondere eine servohydraulische Druckquelle, sein. Hier geschieht die Übersetzung über Flächenverhältnisse von Wirkflächen.

Weitere, die Erfindung verbessernde Maßnahmen werden nachstehend gemeinsam mit der Beschreibung der bevorzugten Ausführungsbeispiele der Erfindung anhand von Figuren näher dargestellt.

In einer weiteren besonders vorteilhaften Ausgestaltung der Erfindung ist ein Wegmesssystem für die Position s des Kolbens, und/oder ein Sensor für die vom Kolben auf das Granulat ausgeübte Kraft F oder für einen auf den Kolben ausgeübten Hydraulikdruck p_{H}, vorgesehen. Der Vorschub des Kolbens ist ein Maß für die Menge Q an Ausgangsmaterial, die aus der Austrittsöffnung austritt. Diese Menge kann über das Wegmesssystem kontrolliert werden. Weiterhin ist die Kraft F unmittelbar mit dem Druck in dem Ausgangsmaterial korreliert.

In einer weiteren besonders vorteilhaften Ausgestaltung der Erfindung ist in dem Druckkopf, und/oder in dem den Druckkopf enthaltenden 3D-Drucker, eine aktive Regelung für die Antriebsquelle des Kolbens vorgesehen, die dazu ausgebildet ist, die vom Kolben auf das Granulat ausgeübte Kraft F auf einen vorgegebenen Sollwert F_{S} zu regeln. Dadurch kann der Druck in dem Ausgangsmaterial auf einem vorgegebenen Wert gehalten werden. Insbesondere kann es auf diese Weise automatisch ausgeglichen werden, wenn Umgebungsluft aus der Schüttung des Granulats entweicht und diese Schüttung somit kompaktiert wird. Der Vorschub des Kolbens kann insbesondere durch eine Prozessregelung weg-und kraftabhängig im µm-Bereich geregelt werden.

In einer weiteren besonders vorteilhaften Ausgestaltung der Erfindung ist im Bereich der Austrittsöffnung ein Drucksensor für den Druck p_{L}, und/oder ein Temperatursensor für die Temperatur T_{L} der flüssigen Phase des Ausgangsmaterials, angeordnet. Der Druck p_{L} ist der primäre Parameter, der über den Massenstrom Q an Ausgangsmaterial aus der Austrittsöffnung entscheidet. Eine zusätzliche Messung der Temperatur T_{L} ermöglicht es, bei der Bestimmung des Massenstroms Q auch die Temperaturabhängigkeit der Viskosität des Ausgangsmaterials zu berücksichtigen. Durch den Kolbenvorschub kann die zu dosierende Menge Q exakt geregelt werden. Für die Qualität des hergestellten Objekts ist die Kontrolle der Temperatur T_{L}, insbesondere in Form einer konstanten und genauen Regelung, sogar wichtiger, um eine thermische Degradation des Ausgangsmaterials zu vermeiden. Insofern kann beispielsweise der Drucksensor bei einer günstigen Variante des Druckkopfes entfallen.

In einer weiteren besonders vorteilhaften Ausgestaltung der Erfindung ist eine Auswerteeinheit vorgesehen, die dazu ausgebildet ist, aus dem Druck p_{L}, und/oder der Temperatur T_{L}, eine Volumenzunahme ΔV₊ der flüssigen Phase des Ausgangsmaterials bei Entspannung durch die Austrittsöffnung auszuwerten. Die Erfinder haben erkannt, dass es für die Genauigkeit der auf das herzustellende Objekt aufgebrachten Strukturen nicht maßgeblich ist, was genau an Material die Austrittsöffnung verlässt. Vielmehr ist maßgeblich, was auf dem herzustellenden Objekt ankommt. Da die Erfindung es ermöglicht, das Ausgangsmaterial mit wesentlich höheren Drücken durch kleine Austrittsöffnungen zu treiben als dies nach dem bisherigen Stand der Technik möglich war, wird die Volumenzunahme ΔV₊ durch die Entspannung dieser hohen Drücke zu einem für die tatsächlich hergestellte Strukturgröße relevanten Effekt. Beispielsweise kann auf Veranlassung der Auswerteeinheit der Kolbenvorschub um einen Betrag vermindert werden, der zu der Volumenzunahme ΔV₊ korrespondiert. Auf diese Weise kann beispielsweise auf dem herzustellenden Objekt ein Strang aus Ausgangsmaterial abgelegt werden, der 100 µm ± 5 µm Durchmesser aufweist.

In einer weiteren vorteilhaften Ausgestaltung der Erfindung ist die Auswerteeinheit zusätzlich dazu ausgebildet, aus der Temperatur T_{L} eine Volumenschwindung ΔV₋ der flüssigen Phase des Ausgangsmaterials beim Erstarren nach dem Austritt aus der Austrittsöffnung auszuwerten. So kann beispielsweise auf dem Objekt ein Strang aus Ausgangsmaterial abgelegt werden, der zunächst einen Durchmesser von 105 µm hat und beim Erstarren exakt auf den gewünschten Durchmesser von 100 µm schrumpft.

In einer weiteren besonders vorteilhaften Ausgestaltung der Erfindung ist die Auswerteeinheit zusätzlich dazu ausgebildet, den Energiestrom E auszuwerten, den die durch die Austrittsöffnung hindurchtretende flüssige Phase des Ausgangsmaterials transportiert. Auf diese Weise kann der Wärmehaushalt im herzustellenden Objekt insgesamt überwacht werden, so dass weitere Druckstrategien und Bahnbewegungen des Druckkopfes angepasst werden können. Beispielsweise kann es bei der Herstellung eines ausgedehnten Objekts erforderlich sein, den Druckvorgang an einer Position zu unterbrechen und nach dem Verfahren des Druckkopfes an eine andere Position fortzusetzen. Wird der Energiestrom E ausgewertet, so kann beispielsweise erkannt werden, dass die Position, an der der Druckvorgang fortgesetzt werden soll, sich auf Grund thermischer Effekte verschoben hat und entsprechend zu reagieren ist. Hierbei kann insbesondere auch der Energieabfluss aus dem Objekt durch Wärmeleitung und/oder Wärmestrahlung berücksichtigt werden.

In einer weiteren besonders vorteilhaften Ausgestaltung der Erfindung ist die Auswerteeinheit zusätzlich dazu ausgebildet, den durch die Austrittsöffnung hindurchtretenden Massenstrom Q des Ausgangsmaterials unter Berücksichtigung der Position s des Kolbens, und/oder aus der vom Kolben ausgeübten Kraft F, auszuwerten. Auf diese Weise kann die Genauigkeit der Dosierung, und insbesondere der auf dem Objekt hergestellten Strukturgrößen, noch weiter verbessert werden.

Damit die von den Sensoren gemessenen, bzw. von der Auswerteeinheit ausgewerteten, Größen sich letzten Endes in einer präziseren Fertigung von Strukturen des herzustellenden Objekts niederschlagen, können diese Größen insbesondere in eine aktive Prozessregelung zurückgekoppelt sein.

Durch eine Qualifizierung und Charakterisierung von Materialien auf dem Druckkopf kann ggfs. ein Parametersatz erstellt werden, der es ermöglicht, Strukturen mit hoher Genauigkeit auch rein gesteuert, d.h. ohne aktive Rückkopplung, herzustellen.

Die beschriebenen Geometrien, Temperaturen und sonstigen Werte sind beliebig auf verschiedene Materialien bzw. Materialgruppen skalierbar.

Weitere, die Erfindung verbessernde Maßnahmen werden nachstehend gemeinsam mit der Beschreibung der bevorzugten Ausführungsbeispiele der Erfindung anhand von Figuren näher dargestellt.

### Ausführungsbeispiele

### Es zeigt:

Figur 1 Ausführungsbeispiel des Druckkopfes 10 gemäß der Erfindung im druckenden Zustand;
Figur 2 weitere Momentaufnahme des Druckkopfes 10 im nicht druckenden Zustand.

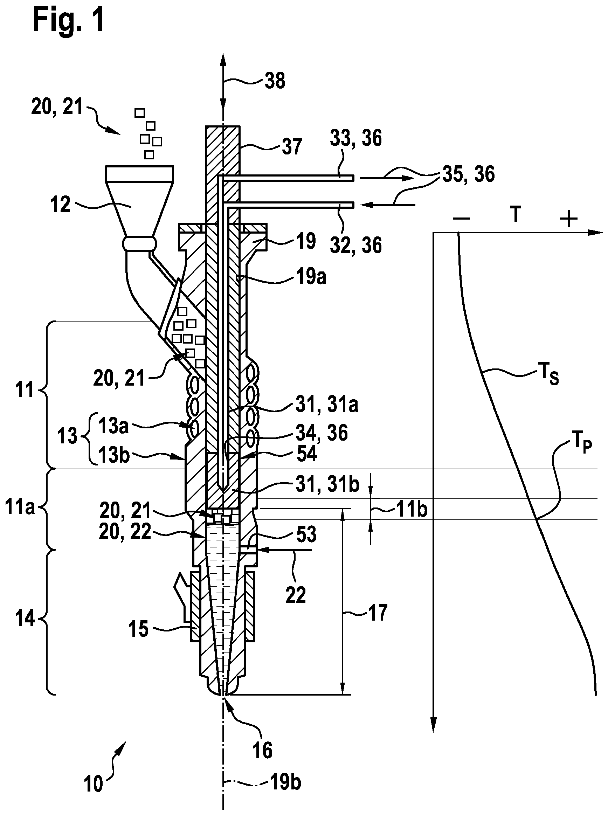

Nach Figur 1 umfasst der Druckkopf 10 ein Gehäuse 19 mit einem darin geführten Kolben 31. Der Kolben 31 besteht aus einem Temperierteil 31a und einem Druckteil 31b. Das Druckteil 31b aus gehärtetem Stahl ist in Bezug auf das Ausgangsmaterial dichtend in der zentralen Bohrung 19a des Gehäuses 19 geführt. Es hindert die feste Phase 21 des Ausgangsmaterials 20 am Entweichen und drückt diese feste Phase 21 aus der Einzugszone 11 in die Kompressionszone 11a, wo sich eine Grenzschicht 11b zur flüssigen Phase 22 des Ausgangsmaterials 20 ausbildet. Dabei bleibt ein Entlüftungsspalt 54, über den Gase aus dem Gehäuse 19 entweichen können. Das Temperierteil 31a aus Aluminium grenzt an das Druckteil 31b an und ist lockerer in der zentralen Bohrung 19a des Gehäuses 19 geführt. Somit ist das Temperierteil 31a einem geringeren mechanischen Verschleiß unterworfen als das Druckteil 31b. Über ein wärmeisolierendes Verbindungsstück 37 ist der Kolben 31 mit seiner Antriebsquelle 38 verbunden, die in Figur 1 im Detail nicht weiter dargestellt ist. Bei Bewegung des Kolbens 31 in Richtung der Austrittsöffnung 16 des Druckkopfes 10 wird die flüssige Phase 22 des Ausgangsmaterials 20 aus der Austrittsöffnung 16 ausgestoßen. Figur 1 ist eine Momentaufnahme in dem Zustand, in dem genau dies möglich ist, der Druckkopf 10 also druckbereit ist. In diesem Zustand ist das Arbeitsvolumen 17 innerhalb der zentralen Bohrung 19a im Gehäuse 19 des Druckkopfes 10 vergleichsweise klein.

Durch das Temperierteil 31a sind ein Vorlaufkanal 32 und ein Rücklaufkanal 33 für ein Temperierungsmedium 35 geführt. Der Vorlaufkanal 32 und der Rücklaufkanal 33 münden in eine zentrale Bohrung 34 im Druckteil 31b. Diese zentrale Bohrung 34 schließt somit den Kreislauf für das Temperierungsmedium 35 und bildet gemeinsam mit dem Vorlaufkanal 32, dem Rücklaufkanal 33 und dem Temperierungsmedium 35 die Temperierungsmittel 36 für den Kolben 31. In der zentralen Bohrung 34 tauscht das Temperierungsmedium 35 Wärme mit dem Druckteil 31b, und somit mit der festen Phase 21 des Ausgangsmaterials 22, aus.

In dem in Figur 1 gezeigten Ausführungsbeispiel wird die feste Phase 21 des Ausgangsmaterials 20 über einen Trichter 12 zugeführt und rieselt in eine Einzugszone 11 im Druckkopf 10, sobald der Kolben 31 hinter diese Einzugszone 11 zurückgezogen wird. Damit dieses Nachrieseln möglich ist, darf in der Einzugszone 11 nur die feste Phase 21 des Ausgangsmaterials vorliegen. Diese feste Phase 21 darf insbesondere nicht aufschmelzen und verkleben. Daher ist die Einzugszone 11 über Kühlmittel 13 von außen gekühlt. Die Kühlmittel 13 umfassen eine aktive Kühlung 13a mit einem Kühlmedium und eine passive Kühlung 13b mit Kühlrippen. Zusätzlich ist das Temperierungsmedium 35 für den Kolben 31 ebenfalls ein kühlendes Medium und trägt somit dazu bei, dass die Temperatur Ts in der Einzugszone unterhalb der Temperatur T_{P} bleibt, ab der die feste Phase 21 des Ausgangsmaterials 20 plastifiziert.

Die feste Phase 21 des Ausgangsmaterials 20 wird in der Plastifizierungszone 14 mittels einer Heizung 15 erwärmt und hierdurch in die flüssige Phase 22 umgewandelt, die bei Druckbeaufschlagung aus der Austrittsöffnung 16 auszutreten vermag.

Der Verlauf der Temperatur T entlang der Achse 19b des Gehäuses 19 ist rechts in Figur 1 skizziert.

In Figur 1 ist zusätzlich ein zusätzlicher Einlass 53 am Gehäuse 19 eingezeichnet, in der in einer weiteren Ausgestaltung die flüssige Phase 22 des Ausgangsmaterials 20 unmittelbar in die Plastifizierungszone 14 eingeleitet werden kann.

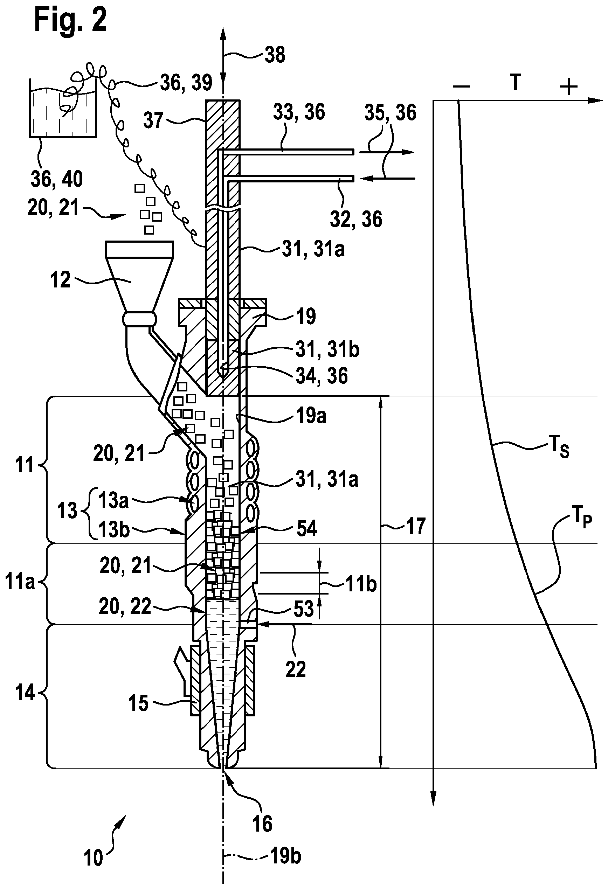

Figur 2 zeigt eine weitere Momentaufnahme des Druckkopfes 10 in dem nicht druckenden Zustand, in dem der Kolben 31 hinter die Einzugszone 11 zurückgezogen wurde. Dies öffnet der festen Phase 21 des Ausgangsmaterials 20 den Weg, in die Einzugszone 11 nachzurieseln. Zugleich wird beim Zurückziehen des Kolbens 31 schlagartig der Wärmekontakt zur festen Phase 21 des Ausgangsmaterials 20, und damit auch der Wärmeeintrag in den Kolben 31, unterbrochen. Die Temperierung des Kolbens 31 kann nun schnell angepasst, deaktiviert oder sogar in ein Heizen umgekehrt werden, um eine Bildung von Kondenswasser am Kolben 31 zu vermeiden. In dem in Figur 2 gezeigten Zustand ist das Arbeitsvolumen 17 innerhalb der zentralen Bohrung 19a im Gehäuse 19 des Druckkopfes 10 maximal.

In Figur 2 ist zusätzlich noch beispielhaft eingezeichnet, wie der Kolben 31 über eine wärmeleitende Litze 39 an ein Wärmereservoir 40 angekoppelt sein kann. Dann gehören auch die Litze 39 und das Wärmereservoir 40 zu den Temperierungsmitteln 36 für den Kolben 31.

## Patentansprüche

1. Druckkopf (10) für einen 3D-Drucker, umfassend ein Arbeitsvolumen (17) zur Aufnahme eines in seiner Viskosität veränderlichen Ausgangsmaterials (20), wobei der Druckkopf einen Kolben (31, 31 a, 31b) aufweist, wobei das Arbeitsvolumen (17) durch Bewegung des Kolbens (31, 31a, 31b) veränderlich ist und wobei der Druckkopf eine Austrittsöffnung (16) aufweist, durch die eine flüssige Phase (22) des Ausgangsmaterials (20) durch die Bewegung des Kolbens (31, 31a, 31b) extrudierbar ist, **dadurch gekennzeichnet, dass** der Kolben (31, 31a, 31b) Temperierungsmittel (36) aufweist.

2. Druckkopf (10) nach Anspruch 1, **dadurch gekennzeichnet, dass** der Kolben (31, 31a, 31b) mindestens einen Kanal (32, 33) für die Durchführung eines Temperierungsmediums (35) aufweist.

3. Druckkopf (10) nach einem der Ansprüche 1 bis 2, **dadurch gekennzeichnet, dass** der Kolben (31) in ein dem Ausgangsmaterial (20, 21) zugewandtes Druckteil (31b) und ein dem Ausgangsmaterial (20, 21) abgewandtes, mit dem Druckteil (31b) in Wärmekontakt stehendes Temperierungsteil (31a) unterteilt ist.

4. Druckkopf (10) nach Anspruch 3, **dadurch gekennzeichnet, dass** mindestens ein Teilabschnitt des Kanals (32, 33) durch das Temperierungsteil (31a) verläuft.

5. Druckkopf (10) nach einem der Ansprüche 3 bis 4, **dadurch gekennzeichnet, dass** das Druckteil (31b) aus einem härteren Werkstoff gefertigt ist als das Temperierungsteil (31a).

6. Druckkopf (10) nach einem der Ansprüche 3 bis 5, **dadurch gekennzeichnet, dass** das Temperierungsteil (31a) durch additive Fertigung, insbesondere durch 3D-Druck, hergestellt ist.

7. Druckkopf (10) nach einem der Ansprüche 1 bis 6, **dadurch gekennzeichnet, dass** der Kolben (31, 31a, 31b) durch Wärmeleitung (39) an ein Wärmereservoir (40) angekoppelt ist.

8. Druckkopf (10) nach einem der Ansprüche 1 bis 7, **dadurch gekennzeichnet, dass** das Arbeitsvolumen (17) eine Einzugszone (11) mit einer Zuführung (12) für das Ausgangsmaterial (20, 21) sowie eine heizbare (15) Plastifizierungszone (14) aufweist, wobei der Kolben (31, 31a, 31b) in die Einzugszone (11) einführbar ist.

9. Druckkopf (10) nach Anspruch 8, **dadurch gekennzeichnet, dass** die Temperierungsmittel (36) dazu ausgebildet sind, die Temperatur Ts der Einzugszone (11) auch dann unterhalb der Temperatur T_{P} zu halten, ab der das Ausgangsmaterial (20) plastifiziert, wenn die flüssige Phase (22) des Ausgangsmaterials (20) aus der Austrittsöffnung (16) austritt.

10. Druckkopf (10) nach Anspruch 9, **dadurch gekennzeichnet, dass** zusätzlich eine außerhalb des Arbeitsvolumens (17) angeordnete Kühlung (13) der Einzugszone (11) vorgesehen ist.

11. Druckkopf (10) nach einem der Ansprüche 1 bis 10, **dadurch gekennzeichnet, dass** der Kolben (31, 31a, 31b) über ein wärmeisolierendes Verbindungsstück (37) mit seiner Antriebsquelle (38) verbunden ist.

## Claims

1. Printhead (10) for a 3D printer comprising an operational volume (17) for holding a feedstock (20), the viscosity of which can change, wherein the printhead has a plunger (31, 31a, 31b), wherein the operational volume (17) can be changed by moving the plunger (31, 31a, 31b) and wherein the printhead has an outlet (16) through which a liquid phase (22) of the feedstock (20) can be extruded by moving the plunger (31, 31a, 31b), **characterized in that** the plunger (31, 31a, 31b) has temperature-control means (36).

2. Printhead (10) according to Claim 1, **characterized in that** the plunger (31, 31a, 31b) has at least one channel (32, 33) for conducting a temperature-control medium (35).

3. Printhead (10) according to one of Claims 1 to 2, **characterized in that** the plunger (31) is divided into a print part (31b) facing the feedstock (20, 21) and a temperature-control part (31a) facing away from the feedstock (20, 21) and in thermal contact with the print part (31b).

4. Printhead (10) according to Claim 3, **characterized in that** at least a portion of the channel (32, 33) runs through the temperature-control part (31a).

5. Printhead (10) according to one of Claims 3 to 4, **characterized in that** the print part (31b) is produced from a harder material than the temperature-control part (31a) .

6. Printhead (10) according to one of Claims 3 to 5, **characterized in that** the temperature-control part (31a) is produced by additive manufacturing, in particular by 3D printing.

7. Printhead (10) according to one of Claims 1 to 6, **characterized in that** the plunger (31, 31a, 31b) is coupled by heat conduction (39) to a heat reservoir (40).

8. Printhead (10) according to one of Claims 1 to 7, **characterized in that** the operational volume (17) has an intake zone (11) with a feed (12) for the feedstock (20, 21) and also a heatable (15) plastification zone (14), wherein the plunger (31, 31a, 31b) can be introduced into the intake zone (11).

9. Printhead (10) according to Claim 8, **characterized in that** the temperature-control means (36) are configured to keep the temperature T_{S} of the input zone (11) below the temperature T_{P} from which the feedstock (20) is plasticized, even when the liquid phase (22) of the feedstock (20) leaves the outlet (16).

10. Printhead (10) according to Claim 9, **characterized in that** a cooling system (13) of the input zone (11) arranged outside the operational volume (17) is provided in addition.

11. Printhead (10) according to one of Claims 1 to 10, **characterized in that** the plunger (31, 31a, 31b) is connected via a thermally insulating connection piece (37) to its drive source (38).

## Revendications

1. Tête d'impression (10) destinée à une imprimante 3D, comprenant un volume de travail (17) destiné à recevoir un matériau de départ (20) de viscosité variable, la tête d'impression comprenant un piston (31, 31a, 31b), le volume de travail (17) pouvant varier sous l'effet d'un mouvement du piston (31, 31a, 31b) et la tête d'impression comprenant une ouverture de sortie (16), au travers de laquelle une phase liquide (22) du matériau de départ (20) peut être extrudée sous l'effet d'un mouvement du piston (31, 31a, 31b), **caractérisée en ce que** le piston (31, 31a, 31b) comprend des moyens de thermorégulation (36).

2. Tête d'impression (10) selon la revendication 1, **caractérisée en ce que** le piston (31, 31a, 31b) comprend au moins un canal (32, 33) pour le passage d'un milieu de thermorégulation (35).

3. Tête d'impression (10) selon l'une quelconque des revendications 1 à 2, **caractérisée en ce que** le piston (31) est divisé en une partie de pression (31b) tournée vers le matériau de départ (20, 21) et une partie de thermorégulation (31a), détournée du matériau de départ (20, 21), en contact thermique avec la partie de pression (31b).

4. Tête d'impression (10) selon la revendication 3, **caractérisée en ce qu'**au moins une section partielle du canal (32, 33) passe au travers de la partie de thermorégulation (31a).

5. Tête d'impression (10) selon l'une quelconque des revendications 3 à 4, **caractérisée en ce que** la partie de pression (31b) est fabriquée en une matière plus dure que la partie de thermorégulation (31a).

6. Tête d'impression (10) selon l'une quelconque des revendications 3 à 5, **caractérisée en ce que** la partie de thermorégulation (31a) est fabriquée par fabrication additive, notamment par impression 3D.

7. Tête d'impression (10) selon l'une quelconque des revendications 1 à 6, **caractérisée en ce que** le piston (31, 31a, 31b) est couplé à un réservoir de chaleur (40) par une conduite de chaleur (39).

8. Tête d'impression (10) selon l'une quelconque des revendications 1 à 7, **caractérisée en ce que** le volume de travail (17) comprend une zone d'alimentation (11) munie d'une entrée (12) pour le matériau de départ (20, 21), ainsi qu'une zone de plastification (14) chauffable (15), le piston (31, 31a, 31b) pouvant être introduit dans la zone d'alimentation (11).

9. Tête d'impression (10) selon la revendication 8, **caractérisée en ce que** les moyens de thermorégulation (36) sont configurés pour maintenir la température T_{S} de la zone d'alimentation (11) en dessous de la température T_{P} à partir de laquelle le matériau de départ (20) se plastifie également lorsque la phase liquide (22) du matériau de départ (20) sort de l'ouverture de sortie (16) .

10. Tête d'impression (10) selon la revendication 9, **caractérisée en ce qu'**un refroidissement (13) de la zone d'alimentation (11) agencé à l'extérieur du volume de travail (17) est en outre prévu.

11. Tête d'impression (10) selon l'une quelconque des revendications 1 à 10, **caractérisée en ce que** le piston (31, 31a, 31b) est relié par l'intermédiaire d'un raccord de connexion thermiquement isolant (37) avec sa source d'entraînement (38).
